Europäisches Patentamt

European Patent Office

Office européen des brevets

(11) Veröffentlichungsnummer: **0 460 357 A2**

## (12) EUROPÄISCHE PATENTANMELDUNG

(21) Anmeldenummer: **91102912.2**

(22) Anmeldetag: **28.02.91**

(51) Int. Cl.5: **G01L 9/00**

(30) Priorität: **08.06.90 CH 1928/90**

(43) Veröffentlichungstag der Anmeldung:
**11.12.91 Patentblatt 91/50**

(84) Benannte Vertragsstaaten:
**AT CH DE DK ES FR GB GR IT LI NL SE**

(71) Anmelder: **Landis & Gyr Betriebs AG**

**CH-6301 Zug(CH)**

(72) Erfinder: **Beat, Hälg**
**Allmendweg 7**
**CH-6330 Cham(CH)**

(54) Vorrichtung zum optischen Messen einer Druckdifferenz.

(57) Eine Vorrichtung zum optischen Messen einer Druckdifferenz ($\delta p$) in einem Medium (14; 14'; 15) mittels eines Fabry-Perot-Interferometers (9) weist eine transparente planparallele Platte (1) mit einem ersten Spiegel (7) und einen auf einer Messmembran (4) angeordneten zweiten Spiegel (8) auf, der senkrecht zur Spiegelebene in der optischen Achse (10) bewegbar ist, wobei die Druckdifferenz über der Messmembran (4) einen Membranhub bewirkt. Um mechanische Restspannungen in der Messmembran (4) zu vermeiden, wird die Trägerplatte (2) im Bereich der Messmembran (4) auf eine vorbestimmte Dicke verringert. Das Material der Trägerplatte (2) geht ringsum nahtlos in das Material der von der Trägerplatte (2) aufgespannten Messmembran (4) über.

## Fig. 1

Die Erfindung bezieht sich auf eine Vorrichtung zum optischen Messen einer Druckdifferenz der im Oberbegriff des Anspruchs 1 genannten Art.

Solche Vorrichtungen werden in Verbindung mit einer Lochblende zur Bestimmung der Durchflussmenge verwendet, wie z. B. bei Wärmemengenzählern oder bei Gas- und Flüssigkeitsmengenmessern.

Aus der EP 172 623 A ist beispielsweise bekannt, ein Fabry-Perot-Interferometer zur Druckmessung einzusetzen, wobei wenigstens der eine Spiegel des Interferometers durch die resultierende Kraft der auf beiden Seiten des Spiegels wirkenden Druckkräfte bewegt und seine Verschiebung optisch gemessen wird. Das Fabry-Perot-Interferometer setzt sich aus einem Glasträger mit einer eingeätzten Vertiefung und einer über die Vertiefung gespannten Membran z. B. aus Silizium zusammen. Der Boden der Vertiefung und die dem Glas zugewandte Seite der Membran sind verspiegelt, so dass die Anordnung ein optisches Interferometer bildet.

Die EP 0 309 643 beschreibt Stellglieder zur Beeinflussung und zur Messung der Durchflussmenge eines gasförmigen oder flüssigen Mediums in einer Rohrleitung, die ein mechanisch auslesbares Druckmesselement im Schliesskörper aufweisen, das die Differenz der Druckwerte im strömenden Medium vor und nach dem Schliesskörper misst. Aus der Stellung des Schliesskörpers und der gemessenen Differenz der Druckwerte ist die Durchflussmenge des Mediums pro Zeiteinheit berechenbar.

Der Erfindung liegt die Aufgabe zugrunde, eine kostengünstige Vorrichtung zum genauen optischen Messen von Druckdifferenzen in Medien zu schaffen.

Die genannte Aufgabe wird erfindungsgemäss durch die Merkmale des Anspruchs 1 gelöst. Vorteilhafte Ausgestaltungen ergeben sich aus den Unteransprüchen.

Es zeigt:

| Figur 1 | eine optische Druckmessvorrichtung mit einer Auswerteeinheit, |
| Figur 2 | ein Membranblock mit Einlasskanälen, |
| Figur 3 | der Membranblock mit einer Entkopplungsfuge, |
| Figur 4 | ein Mikrofilter in einem Einlasskanal und |
| Figur 5 | die Messvorrichtung mit einem Innenraum, der aus einer Vertiefung in einer Trägerplatte gebildet ist. |

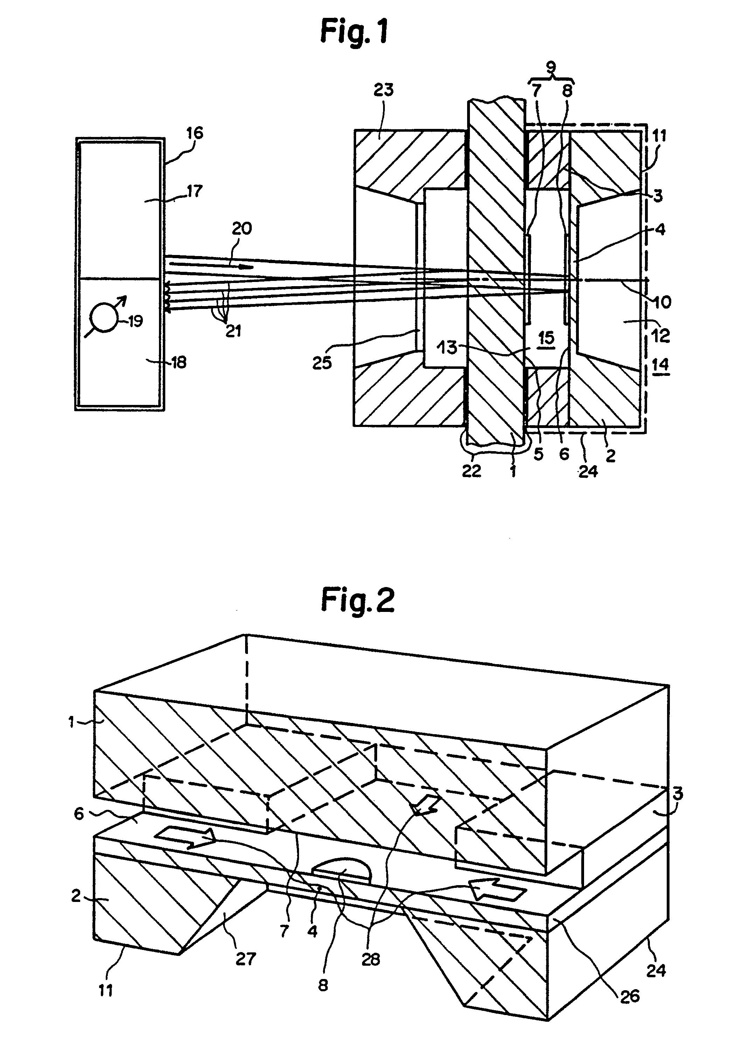

In der Figur 1 bedeutet 1 eine beispielsweise planparallele transparente Platte, 2 eine Trägerplatte und 3 ein Distanzstück, das die einander zugewandten Oberflächen der Platte 1 und der Trägerplatte 2 parallel in einem vorbestimmten Abstand distanziert und fest verbindet. Die Trägerplatte 2 weist beispielsweise im Zentrum eine mittels Abtragens vom Material hergestellte Messmembran 4 auf, die in der Mitte der Trägerplatte 2 wie von einem Rahmen aufgespannt ist. Das Material der Trägerplatte 2 geht ringsum nahtlos und ohne zusätzliche Störungen im kristallinen Bau in das Material der Messmembran 4 über, die daher praktisch frei von Restspannungen ist, die die Genauigkeit der Messung verfälschen.

Eine Oberfläche 5 der Platte 1 und eine Innenfläche 6 der Trägerplatte 2, die einander zugewandt und vorzugsweise poliert sind, weisen im Bereich der Messmembran 4 einen spiegelnden Belag von vorbestimmter Fläche auf, einen ersten Spiegel 7 auf der Oberfläche 5 und einen zweiten Spiegel 8 auf der Innenfläche 6. Sie bilden ein Fabry-Perot-Interferometer 9. Die optische Achse 10 des Interferometers 9 ist eine gemeinsame Senkrechte durch die Flächenzentren der beiden Spiegel 7 und 8.

Die der Platte 1 zugewandte Seite der Messmembran 4 ist mit Vorteil bündig mit der Innenfläche 6 der Trägerplatte 2, damit die den zweiten Spiegel 8 tragende Oberfläche der Messmembran 4 die Vergütung der polierten Innenfläche 6 aufweist. Beim Herstellen der Messmembran 4 wird das Material der Trägerplatte 2 nur von einer Seite her abgetragen, bis die vorbestimmte Dicke der Messmembran 4 erreicht ist. Beispielsweise erfolgt das Abtragen von der dem zweiten Spiegel 8 abgewandten Aussenseite 11 her. In der Aussenseite 11 entsteht an dieser Stelle eine einzige, für die Messvorrichtung charakteristische Vertiefung 12 in der Trägerplatte 2.

Das Distanzstück 3 besteht vorzugsweise aus dem gleichen Material wie die Trägerplatte 2 und umgibt einen zwischen der Platte 1 und der Trägerplatte 2 eingeschlossenen Innenraum 13. Ein an die Aussenseite 11 grenzender Aussenraum und die Vertiefung 12 weisen ein Medium 14 mit dem Druck $P_1$ auf, während im Innenraum 13 in einem Innenraummedium 15 ein Druck $P_2$ herrscht. Auf die Messmembran 4 wirken daher die durch eine Druckdifferenz $\delta p$ verursachten Kräfte ein und bewirken gegen die Rückstellkräfte in der Messmembran 4 einen Membranhub $H(\delta p)$ längs der optischen Achse 10. Ist die Druckdifferenz $\delta p$ gleich Null, weist die Messmembran 4 keinen Membranhub $H$ auf. Der auf der optischen Achse 10 zwischen den beiden Spiegeln 7 und 8 gemessene Abstand, der die optische Länge $L$ des Interferometers 9 bestimmt, besitzt einen Wert $A(\delta p = 0) = A_o$, der von der Höhe des Distanzstücks 3 vermindert um die Dicke der beiden Spiegel 7 und 8 vorbestimmt ist. Der Abstand $A(\delta p)$ für einen Wert der Druckdifferenz $\delta p$ verschieden von Null beträgt daher

$$A(\delta p) = A_o + H(\delta p).$$

Entsprechend den durch die Druckdifferenz $\delta p$ erzeugten Kräften kann der Membranhub $H(\delta p)$ sowohl positive als auch negative Werte annehmen. Vorzugsweise ist der Druck $P_1$ grösser als der Druck $P_2$ gewählt, damit sich die Messmembran 4 bei einer zu grossen Druckdifferenz $\delta p$ auf die Platte 1 stützt und nicht platzen kann.

Ist der Innenraum 13 des Interferometers 9 beispielsweise hermetisch dicht abgeschlossen und das Innenraummedium 15 gasförmig, hängt die optische Länge L des Interferometers 9 nur vom Druck des die Messvorrichtung umgebenden Mediums 14 ab. Die Messvorrichtung ist beispielsweise als Fühler eines Höhenmessers verwendbar. Ist der Innenraum 13 evakuiert, misst sie direkt den absoluten Druck $P_1$ im Aussenraum.

Gase oder Flüssigkeiten sind als Medien 14 und 15 verwendbar, wobei die beiden Medien 14, 15 beidseits der Messmembran 4 nicht notwendigerweise gleich sind.

Eine Auswerteeinheit 16 zum Erfassen und Messen des Membranhubs $H(\delta p)$ umfasst wenigstens eine Lichtquelle 17 und einen Analysator 18, der das Messergebnis z. B. auf einem geeigneten Anzeigegerät 19 darstellt oder einem hier nicht gezeigten weiteren Auswertegerät zuführt. Die Auswerteeinheit 16 misst in bekannter Weise die optische Länge L des Interferometers 9 und erfasst daher jede Aenderung des Membranhubs $H(\delta p)$.

Beispielsweise weist der erste Spiegel 7 einen teildurchlässigen Belag auf, dessen Reflexionsvermögen für senkrecht auffallendes Licht zwischen 25 % und 75 % beträgt, während der zweite Spiegel 8 mehr als 90 % des auffallenden Lichtes reflektiert.

Die Lichtquelle 17 sendet Licht eines Einfallstrahls 20 durch die Platte 1 hindurch auf den ersten Spiegel 7. Das einfallende Licht 20 wird teilweise am ersten Spiegel 7 reflektiert, teilweise dringt es in den Innenraum 13. Das Licht wird dort vom zweiten Spiegel 8 durch den Spiegel 7 hindurch zur Auswerteeinheit 16 zurückgeworfen und bildet zusammen mit dem direkt am ersten Spiegel 7 reflektierten Licht einen Signalstrahl 21.

Die Intensität des Signalstrahls 21 weist ein von der optischen Länge L und der Wellenlänge des Lichtes 19 abhängiges Interferenzmuster auf, das vom Analysator 18 als Mass für den Membranhub $H(\delta p)$ auswertbar ist. Da der Abstand der beiden Spiegel 7 und 8 gemessen auf der optischen Achse 10 gerade die Hälfte der optischen Länge L ist, verändert sich die optische Länge L um das Doppelte des Membranhubs $H(\delta p)$. Das Anzeigegerät 19 zeigt beispielsweise den Membranhub $H(\delta p)$

in Längeneinheiten bzw. die Druckdifferenz $\delta p$ in Druckeinheiten an.

Der Vorteil dieser Messvorrichtung begründet sich im fast völligen Fehlen von Restspannungen in der so hergestellten Messmembran 4, da diese Restspannungen besonders bei kleinen Druckdifferenzen $\delta p$ den Membranhub $H(\delta p)$ merkbar verfälschen und daher das Auflösungsvermögen im unteren Messbereich beeinträchtigen.

Sind beide Spiegel 7 und 8 teildurchlässig und ist die Messmembran 4 transparent, kann das Interferometer 9 auch in Transmission verwendet werden, wobei sich das Interferometer 9 im Lichtweg zwischen der Lichtquelle 17 und dem Analysator 18 befindet. Die optische Länge L bestimmt das von der Lichtwellenlänge abhängige Transmissionsvermögen des Interferometers 9. Es ist auch denkbar, dass bei einer den Medien 14, 15 angepassten Materialwahl die Oberflächen der Platte 1 und der Messmembran 4 die Aufgabe der Spiegel 7 und 8 selbst genügend gut erfüllen.

Das einfallende Licht 20 und der Signalstahl 21 werden vorzugsweise in Lichtleitern geführt, beispielsweise in Lichtleitfasern von 50 $\mu$m bis 200 $\mu$m Durchmesser. Derart dünne Lichtleitfasern erlauben eine grosse Freiheit in der Anordnung der Messvorrichtung und der Auswerteeinheit 16.

Bei einer vorteilhaften Ausführung des Interferometers 9 besteht die Platte 1 aus einem nichtmetallischen Glas guter optischer Qualität und die Trägerplatte 2 aus einem einkristallinen Material, beispielsweise aus einem Halbleitermaterial. Besonders vorteilhaft ist die grosse Festigkeit der einkristallinen Messmembran 4.

Einkristallines Silizium bietet sich als bevorzugtes Material wegen seiner niederen Kosten, der grossen Festigkeit und der am besten eingeführten Verarbeitungseigenschaften an. Insbesondere kann Silizium mit den aus der Halbleiterfertigung bekannten Mitteln leicht und genau bearbeitet werden. Fügestellen 22 zwischen dem Glas und dem Silizium weisen eine Festigkeit auf, die mit der der beiden Materialien vergleichbar ist, wenn die Fügestellen 22 mit dem als anodisch Bonden bekannten Verfahren erzeugt sind. Gegen viele Medien 14, 15 besitzt diese Materialkombination eine sehr hohe Korrosionsfestigkeit.

Da das Silizium nur im infraroten Licht transparent ist, wird beim Interferometer 9 mit der Messmembran 4 aus Silizium vorzugsweise das einfallende Licht 20 durch die Platte 1 in den Innenraum 13 eingespeist und auf dem gleichen Weg der Signalstrahl 21 in Reflexion gewonnen. Wird die Messvorrichtung nur mit Licht 20 aus dem infraroten Bereich in Reflexion oder in Transmission betrieben, ist die Platte 1 vorteilhaft auch aus Silizium hergestellt, da bei Temperaturänderungen keine mechanischen Spannungen entstehen, die sich auf die Messmembran 4 übertragen können.

Da beim anodisch Bonden eine hohe Temperatur von ca. 400°C benötigt wird und da sich die thermischen Ausdehnungskoeffizienten von Glas und Silizium unterscheiden, treten nach dem Abkühlen der Messvorrichtung mechanische Spannungen zwischen der Platte 1 und der Trägerplatte 2 auf, die von der Betriebstemperatur abhängig sind und die sich auf die Messmembran 4 als Druckspannungen übertragen können. Diese Druckspannungen verfälschen wie die Restspannungen in der Messmembran 4 das Auflösungsvermögen der Messvorrichtung, insbesondere wenn über einen grossen Temperaturbereich kleine Differenzdrücke δp zu messen sind. Beispielsweise ist bei der Verwendung der Messvorrichtung für einen Wärmemengenzähler in einem Heizwasserkreislauf mit einer Umgebungstemperatur zwischen +10°C und +120°C zu rechnen, wobei der Differenzdruck δp von etwa 1 kPa bis 10 kPa mit einer geforderten Genauigkeit von 1 % zu messen ist.

Mit Vorteil ist bei der Messvorrichtung die Platte 1 zwischen der spiegelsymmetrisch zur Platte 1 angeordneten Trägerplatte 2 mit dem Distanzstück 3 und einem Ausgleichsstück 23 eingespannt, damit sich die in der Platte 1 auftretenden mechanischen Spannungen kompensieren und die Platte 1 sich nicht temperaturabhängig verbiegt. Dadurch sind die unerwünschten mechanischen Spannungen von der Messmembran 4 ferngehalten. Beispielhaft ist auf der von der Trägerplatte 2 abgewandten Oberfläche der Platte 1 der Ausgleichsblock 23 angeordnet. Der Ausgleichsblock 23 weist vorzugsweise die gleiche Form und das gleiche Material auf wie ein Membranblock 24, der ein Verbund aus der Trägerplatte 2 mit der Messmembran 4 und dem Distanzstück 3 ist. Der Ausgleichsblock 23 und der Membranblock 24 sind beidseits auf die Platte 1 anodisch gebondet und weisen die optische Achse 10 als die Symmetrieachse auf. Anstelle der Messmembran 4 besitzt der Ausgleichsblock 23 eine Oeffnung 25.

Eine Ausführung der Messvorrichtung zeigt beispielhaft die Figur 2. Die Trägerplatte 2 weist eine quadratische Form mit einer Kantenlänge von etwa 2,5 mm und einer Dicke von ungefähr einem halben Millimeter auf. Sie besteht aus einkristallinem Silizium, wobei die Innenfläche 6 die {1,0,0}-Ebene des Kristalls bildet. Die auf den Membranblock 24 aufgesetzte Platte 1 zeigt in der Zeichnung zur Verdeutlichung gestrichelte Begrenzungslinien der darunterliegenden Elemente 2 und 3 des Membranblocks 24 (Figur 1).

Ein Verfahren, das sich für eine gleichzeitige und daher sehr kostengünstige Herstellung einer Vielzahl von Membranblöcken 24 mit geringer Fertigungsstreuung eignet, benutzt als Ausgangsmaterial einen hier nicht gezeigten Wafer aus Silizium, der die Dicke der Trägerplatte 2 aufweist und dessen polierte Scheibenflächen durch die {1,0,0}-Ebenen des Kristalls gebildet sind.

In einem ersten Schritt wird eine dotierte Schicht 26 durch die als Innenfläche 6 der Trägerplatten 2 vorbestimmte Fläche des Wafers erzeugt. Die dotierte Schicht 26 weist mit Vorteil die vorbestimmte Dicke der Messmembran 4 auf. Da in der dotierten Schicht 26 die Aetzgeschwindigkeit gegenüber der im undotierten Silizium des Wafers sehr stark vermindert ist, hängt die Dicke der Messmembran nicht mehr direkt von der Aetzzeit ab, sondern ist durch die Dicke der dotierten Schicht 26 vorbestimmt. Das Mass und die Art der Dotierung ist vom Aetzverfahren abhängig.

In einem zweiten Schritt wird auf der Innenseite 6 eine Schicht aus epitaktischem oder polykristallinem Silizium aufgebracht, deren Dicke die vorbestimmte Höhe der Distanzstücke 3 festlegt. Die Trägerplatte 2 und das Material der Distanzstücke 3 sind auf diese Weise dicht und spannungsfrei miteinander zum Membranblock 24 verbunden.

Als dritter Schritt wird die epitaktische bzw. polykristalline Siliziumschicht durch Aussparungen von nicht gezeigten Masken bis auf die dotierte Schicht 26 abgeätzt, wobei an den von den Masken abgedeckten Stellen die Distanzstücke 3 geformt werden. Sie umschliessen die durch die Messmembran 4 vorbestimmten Stellen, die späteren Innenräume 13 (Figur 1), wobei vorbestimmte Teilbereiche aus den Distanzstücken 3 ausgespart bleiben. Diese Teilbereiche bilden die in der Zeichnung mit Pfeilen markierten Einlasskanäle 28, die der Belüftung des Innenraums 13 für das Messen der Druckdifferenzen δp dienen.

Anschliessend wird eine einseitig teildurchlässig verspiegelte Glasscheibe, die später die Platten 1 bildet und eine dem Wafer entsprechende Grösse aufweist, mit der verspiegelten Oberfläche auf die Distanzstücke 3, die über die Oberfläche des Wafer vorstehen, gepresst und anodisch gebondet, nachdem zwischen zwei vorhergehenden Herstellschritten entweder der ganze Wafer auf der Innenseite 6 verspiegelt oder nur kleine Flächen von etwa 30 bis 300 μm Durchmesser als Spiegel 8 im Zentrum der Messmembranen 4 erzeugt wurden.

Im letzen Herstellungsschritt zur Freilegung der Messmembranen 4 wird die Aussenfläche 11 des Wafers mittels einer hier nicht gezeigten Aetzmaske abgedeckt, die z. B. quadratische Aetzfenster an den für die Vertiefungen 12 (Figur 1) vorbestimmten Stellen aufweist. Da aus ätztechnischen Gründen Seitenwände 27 der Vertiefung 12 durch {1,1,1}-Ebenen des Kristalls gebildet sind, weist die Vertiefung 12 die Form eines Pyramidenstumpfs auf, dessen Grund- und Deckfläche allein durch die Fenstergrösse in der Aetzmaske auf der Aussenseite 11 vorbestimmt sind. Die dotierte Schicht 26 wirkt beim Aetzen vorteilhaft als eine den Abtrag in die Tiefe begrenzende Aetzstopschicht, so dass nach dem Aetzen alle Messmembranen 4 des Wafers mit hoher Genauigkeit gleiche Abmessungen und gleiche mechanische Eigenschaften aufweisen.

Nach dem Entfernen aller Maskenrückstände wird der Wafer mittels einer Diamantsäge in die einzelnen Messvorrichtungen zerlegt.

In einem anderen Verfahren können im oben erwähnten zweiten Schritt die Distanzstücke 3 auch aus Siliziumdioxid hergestellt werden, da dies weniger Fabrikationsschritte benötigt. In die zunächst gleichmässig über der ganzen Innenfläche 6 des Wafers erzeugte Oxidschicht von vorbestimmter Dike, die der Höhe der Distanzstücke 3 entspricht, wird das die Messmembranen 4 bedeckende Oxid bis auf die dotierte Schicht 26 herab entfernt. Anschliessend werden die Messmembranen 4 und die Distanzstücke 3 mit einem spiegelnden metallischen Belag, z. B. Aluminium, überzogen. An den anodisch gebondeten Fügestellen 22 (Figur 1) bewirkt die Metallschicht eine sichere Haftung zwischen dem Oxid und dem Glas.

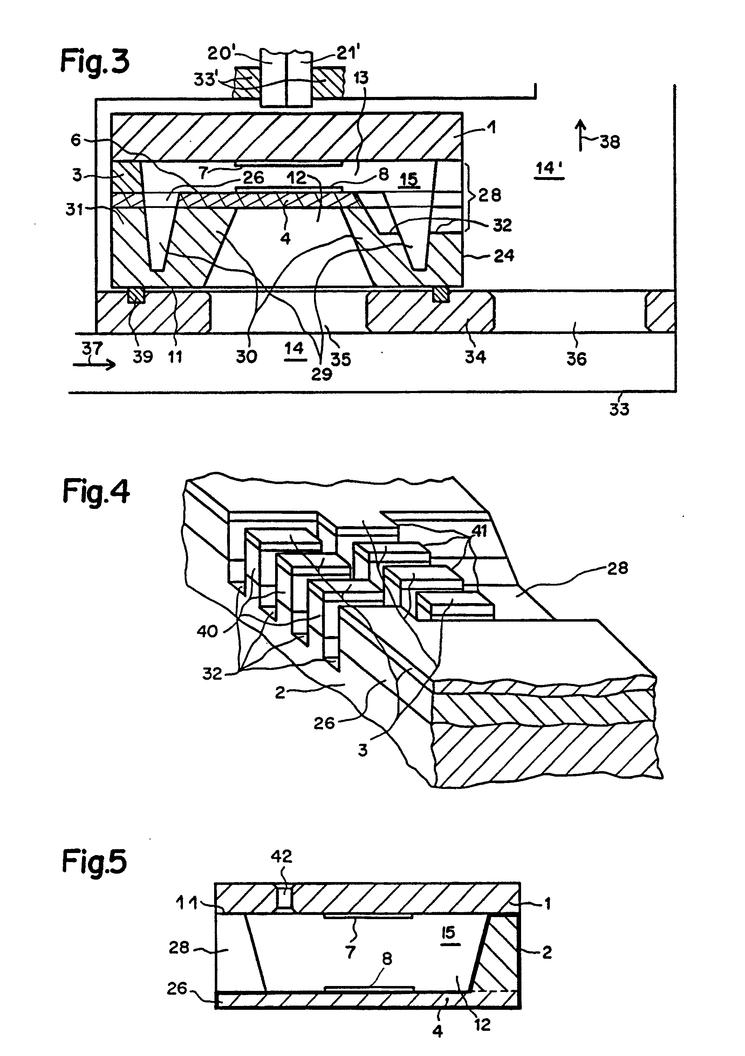

In einer Ausführung zum Reduzieren von thermisch bedingten Spannungen in der Messmembran 4 weist der Membranblock 24 in der Figur 3 eine keilförmige Entkopplungsfuge 29 von vorbestimmter Tiefe auf. Sie wird bereits im dritten Herstellschritt zusammen mit allfälligen Einlasskanälen 28 durch Aussparungen in der als Aetzmaske dienenden dotierten Schicht 26 hindurch zwischen der Messmembran 4 und dem Distanzstück 3 von der Innenfläche 6 her in die Trägerplatte 2 (Figur 2) eingeätzt und umgibt die Messmembran 4 ringsum derart, dass im Membranblock 24 ein deutlich abgesetzter Membranträger 30 entsteht. Der einkristalline Membranblock 24 gliedert sich daher in den Membranträger 30 mit der Messmembran 4 und in Stützwände 31, wobei der Membranträger 30 und die Stützwände 31 über den Boden der Entkopplungsfuge 29 verbunden bleiben. Durch entsprechende Dotierung von der Aussenseite 11 her im Bereich der Entkopplungsfuge 29 kann ihre Tiefe vorbestimmt begrenzt werden. Die Entkopplungsfuge 29 weist den Vorteil auf, dass von den Stützwänden 31 her übertragene mechanische Spannungen nicht auf den Membranträger 30 bzw. auf die Messmembran 4 übertragen werden. In vielen Anwendungen erübrigt sich daher der Ausgleichsblock 23 (Figur 1). Eine Messvorrichtung für eine hohe Auflösung von besser als 1 % kann sowohl den Ausgleichsblock 23 als auch die Entkopplungsfuge 29 aufweisen.

Der Querschnitt der Einlasskanäle 28 hängt von der Viskosität des Innenraummediums 15 ab. Ist der Einlasskanalquerschnitt zu klein, bewirkt der Reibungsverlust in den Einlasskanälen 28 ein verlangsamtes Zu- oder Abfliessen des Innenraummediums 15, und die Messvorrichtung besitzt eine unerwünschte Trägheit oder gar eine Hysterese in der Anzeige der Druckdifferenz $\delta p$. Weist die dotierte Schicht 26 dem Verlauf der Einlasskanäle 28 entsprechende Aussparungen auf, wirkt die dotierte Schicht 26 als Aetzmaske für die Vergösserung der Einlasskanalquerschnitte durch Absenken von Kanalböden 32 in die Trägerplatte 2, z. B. bis zum Boden der Entkopplungsfuge 29.

In einer beispielhaften Ausführung mit den oben erwähnten Trägerplatten 2 mit einer quadratischen Grundfläche von 6,25 mm² weist die Platte 1 eine Dicke von etwa 0,5 bis 2 mm auf, die Messmembran 4 besitzt bei einer Fläche von 1 mm² eine Dicke von etwa 10 $\mu$m, während die Höhe der Distanzstücke 3 etwa 3 $\mu$m beträgt. Der Abstand zwischen den beiden Spiegeln 7 und 8 hat somit den Wert $A_0$ von etwa 2 $\mu$m. Die Einlasskanäle 28 münden auf jeder Seitenfläche des Membranblockes 24 und jeder weist bei einer Länge von 0,6 mm einen Querschnitt von 0,0012 mm² auf. Sind die Kanalböden 32 in die Trägerplatte 2 abgesenkt, können die Querschnitte der Einlasskanäle 28 mehr als 0,15 mm² aufweisen.

In einer beispielhaften Anwendung für die Messung einer Durchflussmenge des Mediums 14, 14' weist ein Rohrsystem 33 eine ebene Trennwand 34 auf. Die Trennwand 34 weist ein Loch 35 und eine Messblende 36 auf. Das Medium 14 strömt zur Trennwand 34 in einer Zustromrichtung 37, zwängt sich durch die Messblende 36 und entfernt sich nach der Trennwand 34 als Medium 14' in einer Abflussrichtung 38. Die Messvorrichtung ist im Rohrsystem 33 auf der dem Medium 14' zugewandten Seite der Trennwand 34 angeordnet, ohne die Strömung an der Messblende 36 zu behindern, und ist mit der Aussenseite 11 derart auf die Trennwand 34 aufgesetzt, dass das Loch 35 mittels Dichtungen 39 zwischen der Aussenseite 11 und der Trennwand 34 abgedichtet ist und das Medium 14 durch das Loch 35 nur bis in die Vertiefung 12 gelangt. Das Medium 14, 14' kann auch entgegengesetzt zu den Richtungen 37 und 38 fliessen, wobei die Druckdifferenz $\delta p$ das entgegengesetzte Vorzeichen aufweist.

Das erste Medium 14 unterscheidet sich vom zweiten Medium 14' nur durch den Wert des Drucks $P_2$, welcher um die Druckdifferenz $\delta p$ erniedrigt ist, die beim Strömen des Mediums 14 durch die Messblende 36 proportional zur Durchflussmenge entsteht. Im Rohrsystem 33 strömt das erste Medium 14 mit einem Druck $P_1$ auf die Messblende 36 zu und wirkt von der Vertiefung 12 her auf die Messmembran 4. Nach der Trennwand 34 weist das zweite Medium 14' den Druck $P_2$ auf, der sich über die Einlasskanäle 28 im Innenraummedium 15 ausbreitet und den Druck $P_2$ vom In-

nenraum 13 her auf die Messmembran 4 ausübt.

Beispielsweise sind für das einfallende Licht 20 (Figur 1) und für den Signalstrahl 21 (Figur 1) Lichtleitfaserbündel 20' und 21' durch eine Wand 33' des Rohrsystems 33 geführt und mit ihrem einen Ende senkrecht auf die Platte 1 gerichtet. Die Lichtleitfaserbündel 20' und 21' sind dicht in die Wand 33' eingesetzt, um Leckverluste des Rohrsystems 33 zu vermeiden.

Die Messvorrichtung ist auch zum Messen von Gas- und Flüssigkeitsmengen verwendbar, wenn die Druckdifferenz δp über die Zeit integriert wird. Da die Messanordnung klein ist, da die Messmembran 4 eine geringe mechanische träge Masse aufweist und da sehr geringe Druckdifferenzen δp genau messbar sind, eignet sich die Messvorrichtung zum Messen in einer Umgebung mit starken Erschütterungen, wie beispielsweise zur Ueberwachung des Kraftstoffverbrauchs bei Verbrennungsmotoren oder als Fühler in dem in der EP-309 643 beschriebenen Stellglied in einem von einer Pumpe angetriebenen Heizmedienkreislauf.

Feine Schwebestoffe im Medium 14 bzw. 14' können sich bei Druckänderungen in das Innenraummedium 15 ausbreiten. Sie können die Einlasskanäle 28 verstopfen und den Druckausgleich behindern oder sie dringen durch die Einlasskanäle 28 in den Innenraum 13 ein und lagern sich auf den Spiegeln 7, 8 ab.

In einer vorteilhaften Ausführung sind der Innenraum 13 und die Einlasskanäle 28 mit einem zähflüssigen transparenten Innenmedium 15 gefüllt. Gele, z. B. Silicon-Gel, oder Oele, z. B. Silicon-Oel, übertragen den Druck $P_2$ auf die Messmembran 4 und halten die Schwebeteilchen von den kritischen Teilen 7, 8, 28 fern.

Die in der Figur 4 ohne die Platte 1 dargestellte Eingangspartie des Einlasskanals 28 weist mit Vorteil ein Mikrofilter auf, das bei Druckänderungen ein Eindringen der Schwebeteilchen in den Innenraum 13 verhindert. Das beispielhaft dargestellte Mikrofilter ist gleichzeitig mit dem Aetzen der Einlasskanäle 28 herstellbar. Die Aetzmaske weist entsprechende Fenster auf, damit beim Aetzen in der Eingangspartie des Einlasskanals 28 gegeneinander versetzte Inseln 40 und 41 entstehen, die durch bis auf den Kanalboden 32 abgetragene, enge und gewundene Durchlasse getrennt sind. Jede der Inseln 40 und 41 weist an der zur Platte 1 zugewandten Fläche einen Teil des Distanzstücks 3 auf mit der die Insel 40 bzw. 41 auf die Platte 1 (Figur 3) gebondet ist.

Die Mündungen der Einlasskanäle 28 können auch mit einem im Handel erhältlichen Mikrofilter aus Glas abgedeckt werden.

Nach der Figur 5 ist für Messvorrichtungen mit weniger hohen Genauigkeitsanforderungen die Aussenseite 11 der Trägerplatte 2 gegen die Platte 1 angeordnet und mit der Platte 1 verbunden, beispielsweise anodisch gebondet. Die dotierte Schicht 26 liegt an der der Aussenseite 11 gegenüberliegenden Oberfläche der Trägerplatte 2. Die dotierte Schicht 26 unterscheidet sich nur durch die Dotierung vom Material der Trägerplatte 2; dies ist in der Zeichnung der Figur 5 durch eine gestrichelte Linie angedeutet. Die Vertiefung 12 bildet den Raum mit dem Innenraummedium 15 zwischen den beiden Spiegeln 7 und 8. Der zweite Spiegel 8 ist in dieser Ausführung auf der Deckfläche der Vertiefung 12 angebracht, die als Pyramidenstumpf eingeätzt ist. Die allfälligen Einlasskanäle 28 sind gleichzeitig mit der Messmembran 4 von der Aussenfläche 11 her mittels Abätzen bis zur dotierten Schicht 26 in die Trägerplatte 2 eingegraben. Der Vorteil dieser Anordnung besteht in einer geringeren Anzahl von Herstellungsschritten.

Anstelle der parallel zur Platte 1 wegführenden Einlasskanäle 28 kann die Vertiefung 12 bzw. der Innenraum 13 (Figur 3) auch über ausserhalb des Lichtwegs in der Platte 1 angeordneten Entlüftungskanäle 42 mit dem Aussenraum in hydraulischer Verbindung stehen, vorzugsweise wenn die Platte 1 gleichzeitig als Trennwand 34 (Figur 3) dient.

**Patentansprüche**

1. Vorrichtung zum optischen Messen einer Druckdifferenz (δp) in einem Medium (14, 14', 15) mittels eines mit zwei einander zugewandten planparallelen Spiegeln (7; 8) begrenzten Fabry-Perot-Interferometers(9), dessen einer als Messmembran (4) ausgestalteter Spiegel (8) senkrecht zur Spiegelebene bewegbar ist und dessen optische Länge (L) vom Membranhub (H) der Messmembran (4) abhängig ist, wobei die Druckdifferenz (δp) über der Messmembran (4) den Membranhub (H) bewirkt, dadurch gekennzeichnet, dass das Fabry-Perot-Interferometer (9) wenigstens eine transparente Platte (1) als Träger des ersten Spiegels (7) und eine Trägerplatte (2) mit der Messmembran (4) umfasst, die der Träger des zweiten Spiegels (8) ist, und dass zum Vermeiden von mechanischen Spannungen die Messmembran (4) Teil der sie umfassenden Trägerplatte (2) ist, wobei durch eine Vertiefung (12) die Dicke der Trägerplatte (2) im Bereich der Messmembran (4) auf einen vorbestimmten Wert verringert ist.

2. Vorrichtung nach Anspruch 1, dadurch gekennzeichnet, dass die den zweiten Spiegel (8) tragende Oberfläche der Messmembran (4) mit der der Platte (1) zugewandten Innenfläche (6) der Trägerplatte (2) bündig ist und dass ein Distanzstück (3) zwischen der Platte (1) und der Trägerplatte (2) angeordnet ist, das die Platte (1) und die Trägerplatte (2) parallel in einem vorbestimmten Abstand distanziert und fest verbindet.

3. Vorrichtung nach Anspruch 1, dadurch gekennzeichnet, dass eine Aussenseite (11) der Trägerplatte (2) unmittelbar mit der Platte (1) verbunden ist, so dass die ausgeätzte Vertiefung (12) zwischen dem ersten Spiegel (7) und dem zweiten Spiegel (8) angeordnet ist.

4. Vorrichtung nach einem der Ansprüche 1 bis 3, dadurch gekennzeichnet, dass die Platte (1) aus einem nichtmetallischen Glas und die Trägerplatte (2) aus monokristallinem Silizium besteht.

5. Vorrichtung nach einem der Ansprüche 1 bis 3, dadurch gekennzeichnet, dass die Platte (1) und die Trägerplatte (2) aus monokristallinem Silizium besteht.

6. Vorrichtung nach Anspruch 4 oder 5, dadurch gekennzeichnet, dass die Dicke der Messmembran (4) durch die Dicke einer dotierten Schicht (26) vorbestimmt ist, die unter einer Innenfläche (6) als Aetzstop erzeugt ist.

7. Vorrichtung nach Anspruch 1 oder 2, dadurch gekennzeichnet, dass die Trägerplatte (2) eine die Messmembran (4) umschliessende, sich in den Innenraum (13) des Interferometers (9) öffnende Entkopplungsfuge (29) aufweist, dass in einem Membranblock (24) Stützwände (31) einen Membranträger (30) umgeben, die über den Boden der Entkopplungsfuge (29) mit dem Membranträger (30) verbunden sind, und dass die Messmembran (4) und die Platte (1) mittels der Stützwände (31) parallel in einem vorbestimmten Abstand distanziert sind.

8. Vorrichtung nach einem der Ansprüche 1 bis 7, dadurch gekennzeichnet, dass Kanäle (28; 42) für eine hydraulische Verbindung des Innenraums (13) mit einem Aussenraum vorhanden sind.

9. Vorrichtung nach Anspruch 8, dadurch gekennzeichnet, dass der Innenraum (13) und jeder Kanal (28; 42) mit einem zähflüssigen transparenten Innenmedium (15) gefüllt sind, um ein Eindringen von Schwebeteilchen des Mediums (14; 14') in den Innenraum (13) zu verhindern.

10. Vorrichtung nach Anspruch 8, dadurch gekennzeichnet, dass zum Fernhalten von Schwebeteilchen des Mediums (14, 14') vom Innenraum (13) jeder Kanal (28; 42) in seiner Eingangspartie ein Mikrofilter aufweist.

11. Vorrichtung nach einem der Ansprüche 1 bis 10, dadurch gekennzeichnet, dass zum Ausgleich thermischer Spannungen die Platte (1) zwischen einem Ausgleichstück (23) und dem Membranblock (24) angeordnet und fest mit diesen verbunden ist und dass das Ausgleichstück eine Oeffnung (25) für das einfallende Licht (20) bzw. einen Signalstrahl (21) aufweist.

# Fig. 1

# Fig. 2

## Fig.3

## Fig.4

## Fig.5